(19) Europäisches Patentamt
European Patent Office
Office européen des brevets

(11) **EP 2 489 426 A1**

(12) **EUROPEAN PATENT APPLICATION**
published in accordance with Art. 153(4) EPC

(43) Date of publication:
**22.08.2012 Bulletin 2012/34**

(51) Int Cl.:
*B01D 69/10* (2006.01)  *B01D 69/12* (2006.01)
*B01D 71/46* (2006.01)  *C08J 7/00* (2006.01)
*C08J 9/36* (2006.01)

(21) Application number: **10823413.9**

(22) Date of filing: **13.10.2010**

(86) International application number:
**PCT/JP2010/067960**

(87) International publication number:
**WO 2011/046145 (21.04.2011 Gazette 2011/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2009 JP 2009239728**

(71) Applicant: **Nitto Denko Corporation
Ibaraki-shi, Osaka 567-8680 (JP)**

(72) Inventors:
• **HAYASHI, Osamu
Ibaraki-shi
Osaka 567-8680 (JP)**

• **KAWAMURA, Kazunori
Ibaraki-shi
Osaka 567-8680 (JP)**
• **FUKUMURA, Takuya
Ibaraki-shi
Osaka 567-8680 (JP)**

(74) Representative: **Setna, Rohan P.
Boult Wade Tennant
Verulam Gardens
70 Gray's Inn Road
London WC1X 8BT (GB)**

(54) **METHOD FOR MANUFACTURING COMPOSITE SEMIPERMEABLE MEMBRANE**

(57) The purpose of the present invention is to provide a method for producing a composite semipermeable membrane, which has excellent chemical resistance, and in which floating of a skin layer is not easily generated. A method for producing a composite semipermeable membrane, of the present invention, characterized in that an atmospheric pressure plasma treatment is performed to a front surface on which a skin layer of an epoxy resin porous support is to be formed, thereafter the skin layer is formed own the front surface.

**Description**

TECHNICAL FIELD

The present invention relates to a method for producing a composite semipermeable membrane composed of a skin layer and a porous support for supporting the skin layer. The composite semipermeable membranes are suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc.

BACKGROUND ART

Recently, composite semipermeable membrane, in which a skin layer including polyamides obtained by interfacial polymerization of polyfunctional aromatic amines and polyfunctional aromatic acid halides is formed on a porous support, have been proposed mostly.

The porous supports include, for example, those in which a microporous layer having a substantial separation function is formed on a surface of a substrate. The substrate includes, for example, a woven fabric, a nonwoven fabric, a mesh net and a foaming sintered sheet, made of materials such as polyester, polypropylene, polyethylene, polyamide and the like. In addition, materials for forming the microporous layer include various materials, for example, such as polysulfones, polyimides and polyvinylidene fluorides, and particularly from the viewpoint of chemical, mechanical and thermal stability, polysulfones have been preferably used, polyaryl ether sulfones have been more preferably used.

As for these composite semipermeable membranes, chemical resistance that can endure various oxidants, particularly chlorine washing, has been required as a result of pursuit of low cost due to more stable operability and simple usability as well as prolongation of membrane lifetime, in various water treatments including desalination plants.

The composite semipermeable membrane has a practical chemical resistance, but it may not be said that such a membrane has chemical resistance to endure against routine or intermittent chlorine sterilization. Therefore, development of a composite semipermeable membrane having higher chemical resistance as well as a practical level of water permeability and salt-blocking property, particularly development of a porous support exhibiting an excellent chemical resistance, has been desired.

On the other hand, a porous cured epoxy resin that is a separation medium capable of selectively distinguishing a substance having a plane molecular structure, such as dioxin or PCB (polychlorinated biphenyl), and capable of having a low back pressure, as well as able being processed on a large scale, has been developed (Patent document 1). The porous cured epoxy resin is a non-particle aggregation type porous object including a columnar three-dimensional branched structure, wherein the porous object has a porosity of 20 to 80% and an average pore diameter of 0.5 to 50 $\mu$m.

The present applicant has previously suggested the use of an epoxy resin porous object as a porous support for a composite semipermeable membrane (unpublished at the priority date of the present application).

When an epoxy resin porous support is used as the porous support, there is a little difficulty in adhesion between the epoxy resin porous support and a skin layer, and floating of the skin layer tends to be easily generated. The "floating of the skin layer" is a phenomenon that swells the skin layer in a semicircle form due to the penetration of water into between the epoxy resin porous support and the skin layer. If water is continuously passed into the swollen state of the skin layer, the skin layer will be broken and defects in the skin layer may be caused.

Here, in order to uniformly form a thin membrane of a furfuryl alcohol polymer on the surface of a polysulfone membrane support, patent document 2 has proposed to perform a hydrophilic surface treatment of the polysulfone membrane support by a low temperature plasma treatment with a nitrogen gas prior to the formation of the thin membrane of a furfuryl alcohol polymer.

In addition, patent document 3 describes that peeling at the interface between a skin layer and a porous support in the subsequent washing of the membrane with pure water or ion-exchanged water can be suppressed by bringing previously the porous support into contact with a solution containing a water-soluble alcohol so that the porous support is made hydrophilic.

PRIOR ART DOCUMENTS

PATENT DOCUMENTS

Patent Document 1: International publication No. WO 2006/073173 Pamphlet
Patent Document 2: Japanese Unexamined Patent Publication No. 62-262711
Patent Document 3: Japanese Unexamined Patent Publication No. 2008-246419

## SUMMARY OF THE INVENTION

### PROBLEMS TO BE SOLVED BY THE INVENTION

The purpose of the present invention is to provide a method for producing a composite semipermeable membrane, which has excellent chemical resistance, and in which floating of a skin layer is not easily generated.

### MEANS FOR SOLVING THE PROBLEMS

As a result of intensive studies in order to solve the above-mentioned problems, the present inventors have found that a composite semipermeable membrane which has excellent chemical resistance and in which floating of a skin layer is not easily generated can be obtained by previously performing an atmospheric pressure plasma treatment to the front surface side on which the skin layer of an epoxy resin porous support is to be formed, using the epoxy resin porous support as a porous support. The present invention has been accomplished based on these findings.

That is, the present invention relates to a method for producing a composite semipermeable membrane, comprising a skin layer formation step of forming a skin layer on the surface of a porous support, characterized in that the porous support is an epoxy resin porous support and the method includes a plasma treatment step wherein an atmospheric pressure plasma treatment is performed to the front surface side on which the skin layer of the epoxy resin porous support is to be formed, prior to the skin layer formation step.

It is preferable to perform the atmospheric pressure plasma treatment in a gas containing a nitrogen gas and/or an ammonia gas. In addition, it is also a preferable aspect to perform the atmospheric pressure plasma treatment in a gas containing a rare gas.

In addition, it is preferable to perform the atmospheric pressure plasma treatment at a discharge intensity of from 0.1 to 5 Wsec/cm$^2$.

In addition, it is preferable to form a skin layer on the front surface side within 24 hours after applying the atmospheric pressure plasma treatment to the front surface side on which the skin layer of the epoxy resin porous support is to be formed.

### EFFECT OF THE INVENTION

The epoxy resin porous support of the present invention is suitably used as a porous support because it shows excellent chemical resistance due to the cross-linked epoxy resin, and further shows high strength (high-pressure resistance) though it has a high porosity due to the continuous three-dimensional network structure. In addition, a composite semipermeable membrane in which floating of a skin layer is not easily generated can be produced due to the increased adhesion between the epoxy resin porous support and the skin layer by surface-modifying (e.g, improvement of hydrophilicity and increase of surface-roughness, etc.) the front surface side on which a skin layer of the epoxy resin porous support is to be formed, through an atmospheric pressure plasma treatment in advance like the producing method of the present invention. Further, the atmospheric pressure plasma treatment manifests a sufficient effect on the epoxy resin porous support, but does not manifest a sufficient effect on the conventional porous support. Moreover, even if corona discharge treatment, hydrophilic treatment using water-soluble alcohols, or saponification treatment is applied to the epoxy resin porous support, the effect is very low compared to the producing method of the present invention, and thus the atmospheric pressure plasma treatment is very effective on the epoxy resin porous support.

### BRIEF EXPLANATION OF THE DRAWINGS

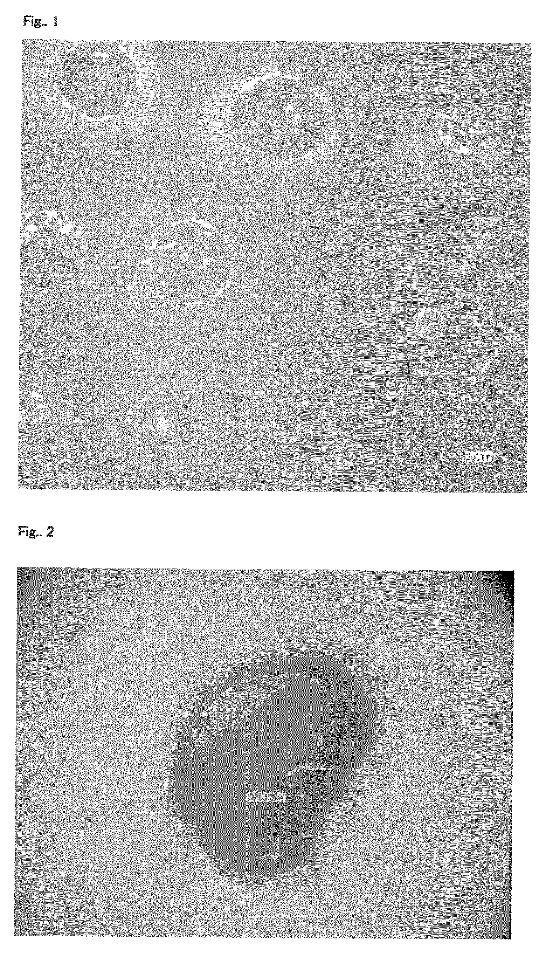

Fig.1 is a photograph (10×) showing the state of floating of the skin layer when the skin layer of the composite semipermeable membrane obtained in Comparative Example 2 was observed using a laser microscope (VK-9710, manufactured by KEYENCE CORPORATION).
Fig. 2 is a photograph (35×) showing the state of defects of the skin layer when an aqueous solution containing Basic Violet (manufactured by Tokyo Chemical Industry Co., Ltd.) was passed to the composite semipermeable membrane obtained in Comparative Example 2, under a pressure of 1.5 MPa and the skin layer was then observed with a digital microscope (KH-3000, manufactured by HIROX Co., Ltd.).

MODE FOR CARRYING OUT THE INVENTION

Hereinafter, the embodiments of the present invention will be described.

In the present invention, an epoxy resin porous support is used as a porous support. An epoxy resin composition containing, for example, an epoxy resin, a curing agent, and a porogen is used as a raw material of the epoxy resin porous support.

The epoxy resin includes, for example, polyphenyl-based epoxy resins (e.g. bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolac type epoxy resin, cresol novolac type epoxy resin, diaminodiphenylmethane type epoxy resin and tetrakis(hydroxyphenyl)ethane base), fluorene-containing epoxy resins, triglycidyl isocyanurates, aromatic epoxy resins (e.g. heteroaromatic ring (e.g. triazine ring)-containing epoxy resin); and non-aromatic epoxy resins (e.g. aliphatic glycidyl ether type epoxy resin, aliphatic glycidyl ester type epoxy resin, alicyclic glycidyl ether type epoxy resin, alicyclic glycidyl ester type epoxy resin). These epoxy resins may be used alone or in combination of two or more thereof.

Of these, in order to form a uniform three-dimensional structure and uniform pores as well as to secure chemical resistance and membrane strength, it is preferable to use at least one kind of aromatic epoxy resins selected from the group consisting of bisphenol A type epoxy resin, brominated bisphenol A type epoxy resin, bisphenol F type epoxy resin, bisphenol AD type epoxy resin, fluorene-containing epoxy resin and triglycidyl isocyanurate; at least one kind of alicyclic epoxy resins selected from the group consisting of alicyclic glycidyl ether type epoxy resin and alicyclic glycidyl ester type epoxy resin. Particularly, it is preferable to use at least one kind of aromatic epoxy resins each having an epoxy equivalent of 6000 or less and a melting point of 170˚C or less, selected from the group consisting of bisphenol A type epoxy resin, brominated bisphenol A type epoxy resin, bisphenol AD type epoxy resin, fluorene-containing epoxy resin and triglycidyl isocyanurate; at least one kind of alicyclic epoxy resins each having an epoxy equivalent of 6000 or less and a melting point of 170˚C or less, selected from the group consisting of alicyclic glycidyl ether type epoxy resin and alicyclic glycidyl ester type epoxy resin.

The curing agent includes, for example, aromatic curing agents such as aromatic amines (e.g. metaphenylenediamine, diaminodiphenylmethane, diaminodiphenylsulfone, benzyldimethylamine, dimethylaminomethylbenzene), aromatic acid anhydrides (e.g. phthalic anhydride, trimellitic anhydride, pyromellitic anhydride), phenol resins, phenol novolac resins and heteroaromatic ring-containing amines (e.g. triazine ring-containing amine); and non-aromatic curing agents such as aliphatic amines (e.g. ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, polyether diamine), alicyclic amines (e.g. isophoronediamine, menthanediamine, N-aminoethylpiperazine, 3,9-bis(3-aminopropyl)2,4,8,10- tetraoxaspiro(5,5)undecane adduct, bis(4-amino-3-methylcyclohexyl)methane, bis(4-aminocyclohexyl)methane and modified product thereof), and aliphatic polyamideamines including polyamines and dimer acids. These curing agents may be used alone or in combination of two or more thereof.

Of these, in order to form a uniform three-dimensional structure and uniform pores as well as to secure membrane strength and elastic modulus, it is preferable to use at least one kind of aromatic amine curing agents each having two or more primary amines in the molecule, selected from the group consisting of metaphenylenediamine, diaminodiphenylmethane and diaminodiphenylsulfone; and at least one kind of alicyclic amine curing agents each having two or more primary amines in the molecule, selected from the group consisting of bis(4-amino-3-methylcyclohexyl)methane and bis(4-aminocyclohexyl)methane.

In addition, a preferable combination of the epoxy resin and the curing agent is a combination of an aromatic epoxy resin and an alicyclic amine curing agent, or a combination of an alicyclic epoxy resin and an aromatic amine curing agent. By using these combinations, heat resistance of the resulting epoxy resin porous sheet becomes higher and thus such a sheet is preferably used as a porous support for the composite semipermeable membranes.

The porogen is a solvent capable of dissolving an epoxy resin and a curing agent as well as capable of causing reaction-induced phase separation after polymerization between the epoxy resin and the curing agent, and examples thereof include cellosolves (e.g. methyl cellosolve, ethyl cellosolve), esters (e.g. ethylene glycol monomethyl ether acetate, propylene glycol monomethyl ether acetate), and glycols (e.g. polyethylene glycol, polypropylene glycol). These solvents may be used alone or in combination of two or more thereof.

Of these, in order to form a uniform three-dimensional structure and uniform pores, it is preferable to use methyl cellosolve, ethyl cellosolve, polyethylene glycol with a molecular weight of 600 or less, ethylene glycol monomethyl ether acetate, and propylene glycol monomethyl ether acetate, and it is particularly preferable to use polyethylene glycol with a molecular weight of 200 or less and propylene glycol monomethyl ether acetate.

Any solvent that can dissolve the reaction product between the epoxy resin and the curing agent may be used as a porogen even if it is insoluble or hardly soluble in individual epoxy resins or curing agents at normal temperature. Such a porogen includes, for example, brominated bisphenol A type epoxy resins ("EPICOAT 5058" manufactured by Japan Epoxy Resin Co., Ltd.).

It is preferable to select the optimal conditions after drawing a phase diagram of the system in order to obtain the desired porosity, average pore diameter and pore diameter distribution because the porosity, average pore diameter and pore diameter distribution of the epoxy resin porous support vary depending on the kind and mixing ratio of raw materials (e.g. epoxy resins, curing agents, porogens) to be used as well as on the reaction conditions such as heating temperature and heating time in the reaction-induced phase separation. In addition, by controlling the molecular weight and molecular weight distribution of the cross-linked epoxy resin, viscosity of the system, and the speed of the cross-linking reaction at the time of phase separation, a stable porous structure can be obtained after fixation of a bicontinuous structure between the cross-linked epoxy resin and the porogen to a specific state.

The kinds and blending ratios of an epoxy resin and a curing agent are preferably determined such that the proportion of aromatic ring-derived carbon atoms to all the carbon atoms constituting an epoxy resin porous support is in the range of 0.1 to 0.65. When the above value is less than 0.1, the recognition properties of the plane structure of the separation medium, which is the characteristic of the epoxy resin porous support, tend to be decreased. On the other hand, when the above value exceeds 0.65, it becomes difficult to form a uniform three-dimensional structure.

In addition, the blending ratio of a curing agent to an epoxy resin is preferably 0.6 to 1.5 equivalents of the curing agent per one equivalent of an epoxy group. If the curing agent equivalent is less than 0.6, the cross-linking density of the cured product becomes decreased, and heat resistance as well as solvent resistance tends to decrease. On the other hand, if the curing agent equivalent exceeds 1.5, unreacted curing agent tends to remain or to inhibit the enhancement of the cross-linking density. In the present invention, a curing accelerator other than the above-mentioned curing agents may be added to obtain the desired porous structure. The curing accelerators that can be used are well-known substances, including, for example, tertiary amines such as triethylamine and tributylamine, and imidazoles such as 2-phenol-4-methylimidazole, 2-ethyl-4-methylimidazole and 2-phenol-4,5-dihydroxyimidazole.

The average pore diameter of the epoxy resin porous support is preferably 0.01 to 0.4 $\mu$m so that a skin layer which becomes semipermeable can be formed on the surface. It is preferable to use a porogen in an amount of 40 to 80% by weight based on the total weight of the epoxy resin, curing agent and porogen so that the average pore diameter of the epoxy resin porous support may be adjusted to 0.01 to 0.4 $\mu$m. If the amount of the porogen is less than 40% by weight, the average pore diameter becomes too small, or no pores tend to be formed. On the other hand, if the amount of the porogen exceeds 80% by weight, the average pore diameter becomes too large to form a uniform skin layer on a porous support, or the salt-blocking property tends to remarkably decrease. The average pore diameter of the epoxy resin porous support is more preferably 0.03 to 0.2 $\mu$m. For that purpose, it is preferable to use the porogen in an amount of 60 to 70% by weight, and more preferably in an amount of 60 to 65% by weight.

Moreover, as a method of adjusting the average pore diameter of the epoxy resin porous support to 0.01 to 0.4 $\mu$m, it is also suitable to mix two or more epoxy resins each having a different epoxy equivalent and to use them. In that case, the difference in epoxy equivalent weights is preferably 100 or more.

In addition, the average pore diameter of the epoxy resin porous support can be adjusted within a target range by appropriately setting various conditions such as the ratio of the entire epoxy equivalents to the porogen and the curing temperature.

The epoxy resin porous support mentioned above can be produced, for example, by the following methods.

1) An epoxy resin composition containing an epoxy resin, a curing agent and a porogen is applied on a substrate and then the applied epoxy resin composition is heated so that the epoxy resin is cross-linked in three dimensions. In this case, a bicontinuous structure is formed due to the phase separation between the cross-linked epoxy resin and the porogen. Thereafter, the porogen is removed from the resulting epoxy resin sheet by washing, and the epoxy resin sheet is dried to produce an epoxy resin porous support having a three-dimensional network structure and pores communicating with each other. The substrate used is not particularly limited, and includes, for example, a plastic substrate, a glass substrate and a metal plate.

2) An epoxy resin composition containing an epoxy resin, a curing agent and a porogen is applied on a substrate, and then another substrate is covered on the applied epoxy resin composition, thereby to produce a sandwich structure product. In addition, it is preferable to provide spacers (e.g., double-sided pressure sensitive adhesive tape) in the four corners of the substrate to make a constant thickness between the substrates. The sandwich structure product is then heated so that the epoxy resin is cross-linked in three dimensions. In this case, a bicontinuous structure is formed due to the phase separation between the cross-linked epoxy resin and the porogen. Thereafter, the resulting epoxy resin sheet is taken out, washed to remove the porogen, and dried to produce an epoxy resin porous support having a three-dimensional network structure and pores communicating with each other. The substrate used is not particularly limited, and includes, for example, a plastic substrate, a glass substrate and a metal plate, and use of a glass substrate is particularly preferable.

3) An epoxy resin composition containing an epoxy resin, a curing agent and a porogen is filled into a mold in a given shape, and then the epoxy resin is cross-linked in three dimensions under heating, thereby to produce a cylindrical or columnar shape resin block. In this case, a bicontinuous structure is formed due to the phase separation between the cross-linked epoxy resin and the porogen. Thereafter, an epoxy resin sheet in the form of a long sheet is formed by cutting the surface of the block at a certain thickness while rotating the block around the cylinder or column axis. Then the porogen is removed from the epoxy resin sheet by washing, and dried to produce an epoxy resin porous support having a three-dimensional network structure and pores communicating with each other.

The conditions for heating the epoxy resin composition are not particularly limited, but the temperature is about 100 to 150˚C and the heating time is about 10 minutes to 5 hours. Post cure may be performed to increase the degree of cross-linking of the cross-linked epoxy resin after heat treatment.

The solvent used for the removal of the porogen from the obtained epoxy resin sheet includes, for example, water, DMF, DMSO, THF, and mixed solvents thereof, and these solvents are appropriately selected depending on the kind of porogens.

The drying conditions of the epoxy resin porous support from which the porogen has been removed are not particularly limited, but the temperature is about 40 to 120˚C, and the drying time is about 0.2 to 3 hours.

The thickness of the epoxy resin porous support is not particularly limited, but it is about 50 to 250 $\mu$m from the viewpoint of strength as well as practical water permeability and salt-blocking property. In addition, the rear side of the epoxy resin porous support may be reinforced with a woven fabric, a nonwoven fabric, and the like.

In the method for producing a composite semipermeable membrane, it is necessary to apply an atmospheric pressure plasma treatment to the front surface side on which a skin layer of an epoxy resin porous support is to be formed, before the skin layer is formed on the surface of the epoxy resin porous support.

The gas used in the atmospheric pressure plasma treatment is not particularly limited, and includes, for example, an oxygen gas, a nitrogen gas, an ammonia gas, and a rare gas (e.g. helium, argon, etc.). These gases may be used alone or in combination with two or more gases thereof. Among these gases, it is preferable to use a nitrogen gas and/or an ammonia gas. When only nitrogen and/or ammonia gas, or a gas containing them is used, it is thought that an affinity to the skin layer containing the polyamide-based resin is improved and the adhesion between the epoxy resin porous support and the skin layer is improved because a nitrogen functional group is introduced into the surface of the epoxy resin porous support. As a result, a composite semipermeable membrane in which floating of a skin layer is not easily generated is obtained. Further, it is also preferable to use a rare gas. When a gas containing a rare gas is used, the surface-roughness on the surface of the support changes by the etching of the surface of the epoxy resin porous support or by the removal of the low molecular weight components on the surface of the epoxy resin porous support, thereby to improve the adhesion between the epoxy resin porous support and the skin layer as well as to obtain a composite semipermeable membrane in which floating of the skin layer is not easily generated. Furthermore, it is a desirable method to use a mixed gas of a rare gas and a small amount of oxygen gas. The hydrophilicity of the epoxy resin porous support is improved by mixing oxygen gas.

In addition, the discharge intensity in the atmospheric pressure plasma treatment is not particularly limited, but it is preferably 0.1 to 5 Wsec/cm$^2$, more preferably 0.3 to 4 Wsec/cm$^2$, further more preferably 0.5 to 3 Wsec/cm$^2$. When the discharge intensity is less than 0.1 Wsec/cm$^2$, it becomes difficult to effectively prevent a skin layer from being floated because surface modification is insufficient. On the other hand, if the discharge intensity exceeds 5 Wsec/cm$^2$, the plasma discharge is hard to be stabilized, resulting in easily giving an uneven effect of such a treatment. In addition, when a gas containing a nitrogen gas and/or an ammonia gas is used, it becomes hard to obtain a desired effect because an ammonium salt is easily formed on the surface of the epoxy resin porous support. Moreover, the discharge time in the atmospheric pressure plasma treatment is not particularly limited, but it is usually about 0.1 to 5 seconds.

In order to impart sufficient hydrophilicity, the contact angle of the surface of the epoxy resin porous support after the atmospheric pressure plasma treatment is preferably 30 degrees or less, and more preferably 20 degrees or less.

In addition, after having applied the atmospheric pressure plasma treatment to the front surface side on which a skin layer of the epoxy resin porous support is to be formed, it is preferable to form the skin layer on the surface within 24 hours, more preferably within 3 hours. A hydrophilizing effect of the treated surface of the epoxy resin porous support tends to decrease at more than 24 hours after having applied the atmospheric pressure plasma treatment.

On the other hand, the material of forming a skin layer is not particularly limited, and includes, for example, cellulose acetate, ethyl cellulose, polyether, polyester and polyamide.

In the present invention, it is preferred that a skin layer includes a polyamide-based resin obtained through polymerization between a polyfunctional amine component and a polyfunctional acid halide component.

The polyfunctional amine component is defined as a polyfunctional amine having two or more reactive amino groups, and includes aromatic, aliphatic, and alicyclic polyfunctional amines.

The aromatic polyfunctional amines include, for example, m-phenylenediamine, p-phenylenediamine, o-phenylenediamine, 1,3,5-triamino benzene, 1,2,4-triamino benzene, 3,5-diaminobenzoic acid, 2,4-diaminotoluene, 2,6-diaminotoluene, N,N'-dimethyl- m-phenylenediamine, 2,4-diaminoanisole, amidol, xylylene diamine etc.

The aliphatic polyfunctional amines include, for example, ethylenediamine, propylenediamine, tris(2-aminoethyl)amine, n-phenylethylenediamine, etc.

The alicyclic polyfunctional amines include, for example, 1,3-diaminocyclohexane, 1,2-diaminocyclohexane, 1,4-diaminocyclohexane, piperazine, 2,5-dimethylpiperazine, 4-aminomethyl piperazine, etc.

These polyfunctional amines may be used independently, and two or more kinds may be used in combination. In order to obtain a skin layer having a higher salt-blocking property, it is preferred to use the aromatic polyfunctional amines.

The polyfunctional acid halide component represents polyfunctional acid halides having two or more reactive carbonyl groups.

The polyfunctional acid halides include aromatic, aliphatic, and alicyclic polyfunctional acid halides.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

These polyfunctional acid halides may be used independently, and two or more kinds may be used in combination. In order to obtain a skin layer having higher salt-blocking property, it is preferred to use aromatic polyfunctional acid halides. In addition, it is preferred to form a cross linked structure using polyfunctional acid halides having trivalency or more as at least a part of the polyfunctional acid halide components.

Furthermore, in order to improve performance of the skin layer including the polyamide resin, polymers such as polyvinyl alcohol, polyvinylpyrrolidone, and polyacrylic acids etc., and polyhydric alcohols, such as sorbitol and glycerin may be copolymerized.

Processes for forming the skin layer including the polyamide resin on the treated surface of the epoxy resin porous support is not in particular limited, and any publicly known methods may be used. For example, the publicly known methods include an interfacial condensation method, a phase separation method, a thin film application method, etc. The interfacial condensation method is a method, wherein an amine aqueous solution containing a polyfunctional amine component, an organic solution containing a polyfunctional acid halide component are forced to contact together to form a skin layer by an interfacial polymerization, and then the obtained skin layer is laid on a treated surface of an epoxy resin porous support, and a method wherein a skin layer of a polyamide resin is directly formed on a treated surface of an epoxy resin porous support by the above-described interfacial polymerization on a treated surface of an epoxy resin porous support. Details, such as conditions of the interfacial condensation method, are described in Japanese Patent Application Laid-Open No. 58-24303, Japanese Patent Application Laid-Open No. 01-180208, and these known methods are suitably employable.

In the present invention, a method is especially preferable in which a covering layer of aqueous solution made from the amine aqueous solution containing a polyfunctional amine component is formed on the treated surface of the epoxy resin porous support, and subsequently an interfacial polymerization is performed by contact of an organic solution containing a polyfunctional acid halide component with the covering layer of aqueous solution, and then a skin layer is formed.

In the interfacial polymerization method, although the concentration of the polyfunctional amine component in the amine aqueous solution is not in particular limited, the concentration is preferably 0.1 to 5% by weight, and more preferably 0.5 to 4% by weight. Less than 0.1% by weight of the concentration of the polyfunctional amine component may easily cause defect such as pinhole in the skin layer, leading to tendency of deterioration of salt-blocking property. On the other hand, the concentration of the polyfunctional amine component exceeding 5% by weight allows to be an excessively large thickness and to raise the permeation resistance, likely giving deterioration of the permeation flux.

Although the concentration of the polyfunctional acid halide component in the organic solution is not in particular limited, it is preferably 0.01 to 5% by weight, and more preferably 0.05 to 3% by weight. Less than 0.01% by weight of the concentration of the polyfunctional acid halide component is apt to make the unreacted polyfunctional amine component remain, to cause defect such as pinhole in the skin layer, leading to tendency of deterioration of salt-blocking property. On the other hand, the concentration exceeding 5% by weight of the polyfunctional acid halide component is apt to make the unreacted polyfunctional acid halide component remain, to be an excessively large thickness and to raise the permeation resistance, likely giving deterioration of the permeation flux.

The organic solvents used for the organic solution is not especially limited as long as they have small solubility to water, and do not cause degradation of the epoxy resin porous support, and dissolve the polyfunctional acid halide component. For example, the organic solvents include saturated hydrocarbons, such as cyclohexane, heptane, octane, and nonane, halogenated hydrocarbons, such as 1,1,2-trichlorofluoroethane, etc. They are preferably saturated hydrocarbons having a boiling point of 300°C or less, and more preferably 200°C or less.

Various kinds of additives may be added to the amine aqueous solution or the organic solution in order to provide easy film production and to improve performance of the composite semipermeable membrane to be obtained. The additives include, for example, surfactants, such as sodium dodecylbenzenesulfonate, sodium dodecyl sulfate, and sodium lauryl sulfate; basic compounds, such as sodium hydroxide, trisodium phosphate, triethylamine, etc. for removing hydrogen halides formed by polymerization; acylation catalysts; compounds having a solubility parameter of 8 to 14 $(cal/cm^3)^{1/2}$ described in Japanese Patent Application Laid-Open No. 08-224452.

The period of time after application of the amine aqueous solution until application of the organic solution on the treated surface of the epoxy resin porous support is preferably 180 seconds or less, more preferably 120 seconds or less, depending on the composition and viscosity of the amine aqueous solution, and on the pore diameter of the surface of the epoxy resin porous support. When an application interval of the above solution is more than 180 seconds, the amine aqueous solution permeates and diffuses deeply into the internal portion of the epoxy resin porous support, and a large amount of unreacted polyfunctional amine components might remain in the epoxy resin porous support. In addition, the unreacted polyfunctional amine components that have permeated deeply into the internal portion of the epoxy resin porous support tend to be hard to be removed even by the subsequent membrane washing processing. In addition, after coating the treated surface of the epoxy resin porous support with the amine aqueous solution, an excess amine aqueous solution may be removed.

In the present invention, after a covering layer of aqueous solution made from the amine aqueous solution is contacted with an organic solution, it is preferred to remove the excessive organic solution on the treated surface of the epoxy resin porous support, and dry the formed membrane on the treated surface by heating at 70°C or more, thereby to form a skin layer. The heat treatment of the formed membrane can improve its mechanical strength and heat resistance. The heating temperature is more preferably 70°C to 200°C, and particularly preferably 80 to 130°C. The heating period of time is preferably about 30 seconds to 10 minutes, and more preferably about 40 seconds to 7 minutes.

The thickness of the skin layer formed on the treated surface of the epoxy resin porous support is not particularly limited, but it is usually 0.05 to 2 $\mu$m, preferably 0.1 to 1 $\mu$m.

The shape of the composite semipermeable membrane of the present invention is not limited at all. That is, the composite semipermeable membrane can take all possible membrane shapes, such as flat membrane shapes and spiral element shapes. In addition, various conventionally known treatments may be applied to the composite semipermeable membrane in order to improve the salt-blocking property, water permeability, resistance against oxidizing agents, and the like.

Moreover, in the present invention, a dry type of composite semipermeable membrane may be made in view of superiority in processability and preservability. When drying treatment is carried out, the shape of the semipermeable membrane is not limited at all. That is, drying treatment is possible in all possible membrane shapes including flat membrane shapes or spiral element shapes. For example, a membrane unit is formed by processing a semipermeable membrane into a spiral shape, and a dry spiral element is formed by drying the membrane unit.

EXAMPLES

The present invention will, hereinafter, be described with reference to Examples, but the present invention is not limited at all by these Examples.

[Evaluation and Measuring Method]

(Measurement of Average Pore Diameter of Epoxy Resin Porous Support)

The average pore diameter of an epoxy resin porous support was measured by a mercury intrusion porosimetry using an AutoPore 9520 manufactured by Shimadzu Corporation. Further, a median diameter under the condition of an initial pressure of 7kPa was adopted as the average pore diameter.

(Measurement of the Number of Floating of Skin Layer)

The produced flat composite semipermeable membrane was immersed in pure water for 3 minutes, dried at room temperature (25˚C) for 3 hours, and cut into a size of 5 × 30 mm, thereby to produce two samples. For two samples, the number of the parts where the skin layer was floated with a degree of 20 $\mu$m or more was observed with a laser microscope (VK-9710, manufactured by Keyence Corporation) and the average value was used as the number of floating of the skin layer. The number of floating of the skin layer is preferably 100 or less.

(Measurement of salt-blocking rate)

The produced composite semipermeable membrane with a shape of a flat film is cut into a predetermined shape and size, and is set to a cell for flat film evaluation. An aqueous solution containing NaCl of 1500 mg/L and adjusted to a pH of 6.5 with NaOH was forced to contact to a supply side, and a permeation side of the membrane at a differential pressure of 1.5 Mpa at 25˚C. An electric conductivity of the permeated water obtained by this operation was measured for, and a salt-blocking rate (%) was calculated. The correlation (calibration curve) of the NaCl concentration and the electric conductivity of the aqueous solution was beforehand made, and the salt-blocking rate was calculated by a following equation. The salt-blocking rate is preferably 98% or more. In addition, the composite semipermeable membrane after the measurement was immersed in pure water of 35˚C for preservation for 6 days, and then a salt-blocking rate was measured in the same manner as above. The salt-blocking rate after immersion preservation is preferably 98% or more.

```
Salt-blocking rate (%) = {1 - (NaCl concentration [mg/L] in
permeated liquid) / (NaCl concentration [mg/L] in supply
solution)} × 100
```

Example 1

(Production of Epoxy Resin Porous support)

To 2.33 g of bisphenol A type epoxy resin (manufactured by Japan Epoxy Resin K.K., trade name "EPIKOTE 828", epoxy equivalent: 184-194 (g/eq)) was added 4.5 g of polyethylene glycol 200 (manufactured by Tokyo Chemical Industry Co., Ltd.), and the mixture was stirred at 2000 rpm for 5 minutes for dissolution, using a rotation/revolution mixer (trade name: "Awatori Rentaro" ARE-250), thereby to obtain an epoxy resin/polyethylene glycol solution. Then, 0.52 g of bis(4-aminocyclohexyl)methane (manufactured by Tokyo Chemical Industry Co., Ltd.) was added to the epoxy resin/polyethylene glycol solution, and the mixture was stirred at 2000 rpm for 10 minutes for dissolution, using the rotation/revolution mixer, thereby to obtain an epoxy resin/polyethylene glycol/curing agent solution A. The prepared solution A was applied on a soda glass plate having a secured certain thickness obtained by laminating two sheets of double-sided pressure sensitive adhesive tapes in the four corners, and another soda glass plate was laminated thereon to obtain a sandwich structure product. Thereafter, the sandwich structure product was placed in a dryer and allowed to react for curing at 120˚C for about 3 hours. After cooling, an epoxy resin sheet was taken out from the sandwich structure product and immersed in water for 12 hours to remove the polyethylene glycol. Then, the sheet was immersed in a 30% aqueous solution of N,N-dimethylformamide (DMF) to remove the unreacted epoxy resin, further immersed in ultrapure water to remove the DMF, and then dried in a dryer at 50˚C for about 4 hours to produce an epoxy resin porous support. The thickness of the epoxy resin porous support was about 150 $\mu$m and the average pore diameter was 0.027 $\mu$m.

(Production of Composite Semipermeable Membrane)

Using an atmospheric pressure plasma treatment apparatus (manufactured by Sekisui Chemical Co., Ltd., AP-T05), an atmospheric pressure plasma treatment was applied to the front surface side on which a skin layer of the prepared epoxy resin porous support is formed, under the conditions of a nitrogen gas flow rate of 60 L/min, a distance between upper and lower dielectrics of 1 mm, a treatment intensity of 2.0 Wsec/cm$^2$ and a treatment time of 1 second. A contact angle of the treated surface just after the plasma treatment was measured using a contact angle measuring instrument (manufactured by Kyowa Interface Science Co., Ltd., Drop Master 500). In addition, the contact angle was measured one second after the dropping with ultrapure water as a dropping solution. As a result, the contact angle was 9 degrees.

At 120 minutes after the above plasma treatment, an aqueous amine solution containing 3 g of m-phenylenediamine, 0.15 g of sodium lauryl sulfate, 6 g of benzene sulfonic acid, 3 g of triethylamine, and 87.85 g of water was applied to the treated surface of the epoxy resin porous support, and then an excessive amount of the aqueous amine solution was removed by wiping to form a coating layer of the aqueous solution. Subsequently, an isooctane solution containing 0.2% by weight of trimesic acid chloride was applied to the surface of the coating layer of the aqueous solution. Then, the excessive solution was removed and the material was maintained in a dryer of 100˚C for 2 minutes to form a skin layer (thickness: about 200 nm) containing a polyamide-based resin on the epoxy resin porous support, and thus a composite semipermeable membrane was obtained. The number of floating of the skin layer and the salt-blocking rate were measured using the composite semipermeable membrane and the results are shown in Table 1.

Example 2

A composite semipermeable membrane was produced in the same manner as Example 1, except that an atmospheric pressure plasma treatment was applied to the front surface side on which a skin layer of an epoxy resin porous support is to be formed, under the condition of a nitrogen gas flow rate of 10 L/min and ammonia gas flow rate of 0.3 L/min in place of the nitrogen gas flow rate of 60 L/min in Example 1. Further, when the contact angle of ultrapure water on the treated surface of the epoxy resin porous support was measured in the same manner as Example 1, it was found to be 10 degrees. Moreover, the results of measuring the number of floating of the skin layer and the salt-blocking rate using the composite semipermeable membrane are shown in Table 1.

Example 3

A composite semipermeable membrane was produced in the same manner as Example 1, except that an atmospheric pressure plasma treatment was applied to the front surface side on which a skin layer of an epoxy resin porous support is to be formed, under the condition of a nitrogen gas flow rate of 10 L/min, an ammonia gas flow rate of 0.3 L/min and a treatment intensity of 4.0 Wsec/cm$^2$ in place of the nitrogen gas flow rate of 60 L/min and the treatment intensity of 2.0 Wsec/cm$^2$ in Example 1. Further, when the contact angle of ultrapure water on the treated surface of the epoxy resin porous support was measured in the same manner as Example 1, it was found to be 8 degrees. Moreover, the results of measuring the number of floating of the skin layer and the salt-blocking rate using the composite semipermeable membrane are shown in Table 1.

Example 4

A composite semipermeable membrane was produced in the same manner as Example 1, except that an atmospheric pressure plasma treatment was applied to the front surface side on which a skin layer of an epoxy resin porous support is to be formed, under the condition of an Ar gas flow rate of 60 L/min, an oxygen gas flow rate of 0.6 L/min and a treatment intensity of 0.5 Wsec/cm$^2$ in place of the nitrogen gas flow rate of 60 L/min and the treatment intensity of 2.0 Wsec/cm$^2$ in Example 1. Further, when the contact angle of ultrapure water on the treated surface of the epoxy resin porous support was measured in the same manner as Example 1, it was found to be 7 degrees. Moreover, the results of measuring the number of floating of the skin layer and the salt-blocking rate using the composite semipermeable membrane are shown in Table 1.

Example 5

(Production of Epoxy Resin Porous Support)

To a container were added 139 parts by weight of bisphenol A type epoxy resin (EPIKOTE 828, manufactured by Japan Epoxy Resin K.K.), 93.2 parts by weight of bisphenol A type epoxy resin (EPIKOTE 1010, manufactured by Japan Epoxy Resin K.K.), 52 parts by weight of bis(4-aminocyclohexyl)methane, and 500 parts by weight of polyethylene glycol 200 (manufactured by Sanyo Chemical Industries, Ltd.), and the mixture was stirred at 400 rpm for 15 minutes with use of a three-one motor, thereby to obtain an epoxy resin composition.

The prepared epoxy resin composition was filled in a cylindrical mold (outside diameter: 35 cm, inside diameter: 10.5 cm) to a height of 30 cm, cured at room temperature (25˚C) for 12 hours, and further reacted for curing at 130˚C for 18 hours to produce a cylindrical resin block. Thereafter, the surface of the resin block was continuously sliced to a thickness of 135 μm by using a cutting device (manufactured by Toshiba Machine Co., Ltd.) while rotating the resin block around the cylinder axis, thereby to obtain a long epoxy resin sheet (100 m in length). Then, the epoxy resin sheet was immersed in pure water for 12 hours so that the polyethylene glycol was removed, and dried in a dryer at 50˚C for about 4 hours to produce an epoxy resin porous support. The thickness of the epoxy resin porous support produced was about 120 $\mu$m and the average pore diameter was 0.04 $\mu$m.

(Production of Composite Semipermeable Membrane)

A composite semipermeable membrane was produced in the same manner as Example 1, except that the above epoxy resin porous support was used in place of the epoxy resin porous support used in Example 1. Further, when the contact angle of ultrapure water on the treated surface of the epoxy resin porous support was measured in the same manner as Example 1, it was found to be 10 degrees. Moreover, the results of measuring the number of floating of the skin layer and the salt-blocking rate using the composite semipermeable membrane are shown in Table 1.

Comparative Example 1

A composite semipermeable membrane was produced in the same manner as Example 1, except that a corona discharge treatment was performed using a corona discharge treatment apparatus (manufactured by Kasuga Electric Works Ltd.) under the conditions of treatment speed: 2 m/min and treatment intensity: 280 W•min/m$^2$ in place of the atmospheric pressure plasma treatment which was applied to the front surface side of the epoxy resin porous support on which a skin layer was to be formed. Further, when the contact angle of ultrapure water on the treated surface of the epoxy resin porous support was measured in the same manner as Example 1, it was found to be 38 degrees. Moreover, the results of measuring the number of floating of the skin layer and the salt-blocking rate using the composite semipermeable membrane are shown in Table 1.

Comparative Example 2

A composite semipermeable membrane was produced in the same manner as Example 1, except that a hydrophilic treatment was performed by immersing an epoxy resin porous support in a 20 wt% aqueous solution of isopropyl alcohol for 10 minutes in place of applying the atmospheric pressure plasma treatment to the front surface side on which a skin layer of the epoxy resin porous support was to be formed in Example 1. Further, the contact angle could not be measured because the epoxy resin porous support that had been subjected to the hydrophilic treatment was in a wet state. Moreover, the results of measuring the number of floating of the skin layer and the salt-blocking rate using the composite semipermeable membrane are shown in Table 1.

Comparative Example 3

(Production of Polysulfone-Based Porous support)

A film-forming dope obtained by dissolving 18% by weight of polysulfone (P-3500, manufactured by Solvay) in N,N-dimethylformamide (DMF) was uniformly applied on a polyester-based nonwoven fabric (manufactured by Awa Paper Mfg. Co. , Ltd. ; thickness 0.09 mm; density 0.8 g/cm$^3$) to a wet thickness of 200 $\mu$m. Then the dope was solidified by immediately immersing it in a pure water-bath of 40 to 50˚C for 3 minutes and the solvent DMF was completely extracted and washed at the same time, thereby to produce a polysulfone-based porous support (140 $\mu$m in thickness) having a microporous polysulfone layer on the nonwoven fabric.

(Production of Composite Semipermeable Membrane)

A composite semipermeable membrane was produced in the same manner as Example 1, except that an atmospheric pressure plasma treatment was performed by using the above polysulfone-based porous support in place of the epoxy resin porous support in Example 1, under the conditions of a nitrogen gas flow rate of 10 L/min and an ammonia gas flow rate of 0.3 L/min in place of the nitrogen gas flow rate of 60 L/min. Further, when the contact angle of ultrapure water on the treated surface of the polysulfone-based porous support was measured in the same manner as Example 1, it was found to be 35 degrees. Moreover, the results of measuring the number of floating of the skin layer and the salt-blocking rate using the composite semipermeable membrane are shown in Table 1.

Comparative Example 4

A composite semipermeable membrane was produced in the same manner as Example 1, except that a hydrophilic treatment in place of the atmospheric pressure plasma treatment was performed by using the above polysulfone-based porous support in place of the epoxy resin porous support in Example 1 and immersing the polysulfone-based porous support in a 20 wt% aqueous solution of isopropyl alcohol for 10 minutes. Further, the contact angle could not be measured because the polysulfone-based porous support that had been subjected to the hydrophilic treatment was in a wet state. Moreover, the results of measuring the number of floating of the skin layer and the salt-blocking rate using the composite semipermeable membrane are shown in Table 1.

Comparative Example 5

A composite semipermeable membrane was produced in the same manner as Example 1, except that an epoxy resin porous support was immersed in a 10 wt% aqueous solution (60˚C) of NaOH for 30 seconds in place of applying the atmospheric pressure plasma treatment to the front surface side on which a skin layer was to be formed of the epoxy resin porous support in Example 1, subsequently washed with pure water for 30 seconds, dried at room temperature, and further saponified. Further, when the contact angle of ultrapure water on the treated surface of the epoxy resin porous support was measured in the same manner as Example 1, it was found to be 115 degrees. Moreover, the results of measuring the number of floating of the skin layer and the salt-blocking rate using the composite semipermeable membrane are shown in Table 1. However, the number of floating of a skin layer could not be measured because the skin layer had not been sufficiently formed on the support.

[Table 1]

| | Porous support | Surface treatment method | Contact angle (degrees) | Number of floating of skin layer | Salt-blocking rate (%) | |
|---|---|---|---|---|---|---|
| | | | | | Before immersion preservation | After immersion preservation |
| Example 1 | Epoxy resin | Atmospheric pressure plasma | 9 | 7 | 99 | 99 |
| Example 2 | Epoxy resin | Atmospheric pressure plasma | 10 | 10 | 99 | 99 |
| Example 3 | Epoxy resin | Atmospheric pressure plasma | 8 | 67 | 99 | 99 |
| Example 4 | Epoxy resin | Atmospheric pressure plasma | 7 | 2 | 99 | 99 |
| Example 5 | Epoxy resin | Atmospheric pressure plasma | 10 | 12 | 99 | 99 |
| Comparative Example 1 | Epoxy resin | Corona discharge | 38 | 124 | 98 | - |
| Comparative Example 2 | Epoxy resin | immersion in IPA aqueous solution | - | 178 | 99 | 90 |
| Comparative Example 3 | Polysulfone | Atmospheric pressure plasma | 35 | 136 | 98 | - |
| Comparative Example 4 | Polysulfone | immersion in IPA aqueous solution | - | 0 | 99 | - |
| Comparative Example 5 | Epoxy resin | Saponification | 115 | - | 10 | - |

INDUSTRIAL APPLICABILITY

The composite semipermeable membrane of the present invention is suitably used for production of ultrapure water, desalination of brackish water or sea water, etc., as well as suitably used for removing or collecting pollution sources or effective substances from pollution, which causes environment pollution occurrence, such as dyeing drainage and electrodeposition paint drainage, leading to a closed system for drainage. Furthermore, the membrane is also used suitably for concentration of active ingredients in foodstuffs usage, and for an advanced water treatment, such as removal of harmful components in water purification and sewage usage.

**Claims**

1. A method for producing a composite semipermeable membrane, comprising a skin layer formation step of forming a skin layer on the surface of an epoxy resin porous support, **characterized in that** the porous support is an epoxy resin porous support and the method comprises a plasma treatment step wherein an atmospheric pressure plasma treatment is performed to the front surface side on which the skin layer of the epoxy resin porous support is to be formed, prior to the skin layer formation step.

2. The method for producing a composite semipermeable membrane according to claim 1, wherein the atmospheric pressure plasma treatment is performed in a gas containing a nitrogen gas and/or an ammonia gas.

3. The method for producing a composite semipermeable membrane according to claim 1, wherein the atmospheric pressure plasma treatment is performed in a gas containing a rare gas.

4. The method for producing a composite semipermeable membrane according to claim 1, wherein the atmospheric pressure plasma treatment is performed at a discharge intensity of 0.1 to 5 Wsec/cm$^2$.

5. The method for producing a composite semipermeable membrane according to claim 1, wherein the skin layer formation step is performed within 24 hours after the plasma treatment step.

Fig.. 1

Fig.. 2

<table>
<tr><td colspan="2">**INTERNATIONAL SEARCH REPORT**</td><td>International application No.<br>PCT/JP2010/067960</td></tr>
</table>

| A. CLASSIFICATION OF SUBJECT MATTER |
|---|
| *B01D69/10*(2006.01)i, *B01D69/12*(2006.01)i, *B01D71/46*(2006.01)i, *C08J7/00*(2006.01)i, *C08J9/36*(2006.01)i |

According to International Patent Classification (IPC) or to both national classification and IPC

| B. FIELDS SEARCHED |
|---|
| Minimum documentation searched (classification system followed by classification symbols)<br>B01D69/10, B01D69/12, B01D71/46, C08J7/00, C08J9/36 |

Documentation searched other than minimum documentation to the extent that such documents are included in the fields searched

| Jitsuyo Shinan Koho | 1922–1996 | Jitsuyo Shinan Toroku Koho | 1996–2010 |
|---|---|---|---|
| Kokai Jitsuyo Shinan Koho | 1971–2010 | Toroku Jitsuyo Shinan Koho | 1994–2010 |

Electronic data base consulted during the international search (name of data base and, where practicable, search terms used)
JSTPlus/JMEDPlus/JST7580(JDreamII)

| C. DOCUMENTS CONSIDERED TO BE RELEVANT | | |
|---|---|---|
| Category* | Citation of document, with indication, where appropriate, of the relevant passages | Relevant to claim No. |
| X | JP 2008-515668 A (The Research Foundation of the State University of New York), 15 May 2008 (15.05.2008), claim 1; paragraphs [0014], [0051], [0052] & EP 1796822 A2 & WO 2007/001405 A2 & KR 10-2007-0059135 A & CN 101039798 A | 1-5 |
| P,A | WO 2010/047383 A1 (Nitto Denko Corp.), 29 April 2010 (29.04.2010), claims 1, 3, 7; paragraphs [0050], [0051] & JP 2010-121122 A | 1-5 |
| A | JP 2008-30032 A (Millipore Corp.), 14 February 2008 (14.02.2008), claim 1; paragraphs [0019], [0026] & US 2008/0029451 A1 & EP 1882513 A1 & CN 101143302 A | 1-5 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>29 November, 2010 (29.11.10) | Date of mailing of the international search report<br>07 December, 2010 (07.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/067960 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | Atmosphaerische Plasmaverfahren zur Vorbehandlung., Oberfl - Polysurf, 2003.09, Vol.44 No.4, Page.10-14 | 1-5 |

Form PCT/ISA/210 (continuation of second sheet) (July 2009)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006073173 A
- JP 62262711 A
- JP 2008246419 A
- JP 58024303 A
- JP 1180208 A
- JP 8224452 A